# EUROPÄISCHE PATENTSCHRIFT

(11) **EP 2 549 431 B1**
(45) Veröffentlichungstag und Bekanntmachung des Hinweises auf die Patenterteilung: **16.04.2014**
(21) Anmeldenummer: 12172905.7
(22) Anmeldetag: 21.06.2012
(51) Int. Cl.: G06T 5/50

(54) **Bildfusion zur Überwachung eines Gefahrenbereichs**
Image fusion for surveillance of a hazardous area
Fusion d'images pour surveillance d'une zone dangereuse

(30) Priorität: 21.07.2011 DE 102011052050
(43) Veröffentlichungstag der Anmeldung: 23.01.2013
(73) Patentinhaber: SICK AG, 79183 Waldkirch (DE)
(72) Erfinder: Braune, Ingolf, 79194 Gundelfingen (DE)
(74) Vertreter: Hehl, Ulrich

(56) Entgegenhaltungen:
- EP-A1- 2 023 160
- EP-A1- 2 048 557
- DE-A1- 3 106 100
- DE-A1-102005 063 217
- DE-A1-102007 003 712
- DE-A1-102009 004 898
- US-A1- 2011 157 159
- Maria Garcia-Alegre ET AL: "Real-Time Fusion of Visual Images and Laser Data Images for Safe Navigation in Outdoor Environments", Sensor Fusion - Foundation and Applications, 24. Juni 2011 (2011-06-24), Seiten 121-138, XP55041041, DOI: 10.5772/16690 ISBN: 978-9-53-307446-7 Gefunden im Internet: URL:http://www.intechopen.com/books/sensor -fusion-foundation-and-applications/real-t ime-fusion-of-visual-images-and-laser-data -images-for-safe-navigation-in-outdoor-env ironments [gefunden am 2012-10-15]

## Beschreibung

Die Erfindung betrifft ein 3D-Kamerasystem sowie ein Verfahren zum Einrichten oder Überprüfen eines 3D-Kamerasystems nach dem Oberbegriff von Anspruch 1 beziehungsweise 11.

Im Gegensatz zu herkömmlichen Kamerasystemen messen 3D-Kameras zusätzlich die Abstände der jeweils erfassten Bildelemente und erzeugen somit dreidimensionale Bilddaten, die auch als Entfernungsbild oder Tiefenkarte bezeichnet werden. Es sind verschiedene Technologien bekannt, um dreidimensionale Bilddaten zu erfassen.

Eine Stereokamera besteht im Wesentlichen aus zwei zueinander beabstandeten Kameras, die jeweils zwei Bilder aus leicht unterschiedlichen Perspektiven aufnimmt. In den überlappenden Bildbereichen werden gleiche Strukturen identifiziert und aus der Disparität und den optischen Parametern des Kamerasystems mittels Triangulation Entfernungen und somit ein dreidimensionales Entfernungsbild beziehungsweise eine Tiefenkarte berechnet.

Eine Lichtlaufzeitkamera verwendet einen pixelaufgelösten Matrixchip und eine aktive Beleuchtung und jedes Pixel ist in der Lage, die Lichtlaufzeit von der Beleuchtung zum Objekt und zurück zu dem Pixel zu bestimmen, um hieraus über die Lichtgeschwindigkeit den Abstand zu messen. Ein bekanntes Verfahren hierzu ist unter dem Namen Photomischdetektion bekannt.

In einem weiteren Ansatz, der beispielsweise in der US 2008/0240502 A1 beschrieben wird, erzeugt die Kamera ein Beleuchtungsmuster mit abstandsabhängigen Eigenschaften. Daraus wird dann auf die Entfernung geschlossen, in dem sich ein Objekt befindet, auf welches das Beleuchtungsmuster trifft.

Ein besonders anspruchsvolles Anwendungsfeld für 3D-Kameras ist die Sicherheitstechnik. Dabei wird eine gefährliche Maschine abgesichert, wie etwa eine Presse oder ein Roboter, und bei Eingriff eines Körperteils in einen Gefahrenbereich um die Maschine herum erfolgt eine Absicherung. Dies kann je nach Situation die Abschaltung der Maschine oder das Verbringen in eine sichere Position sein. Mit Hilfe der Tiefeninformationen können in sicherheitstechnischen Anwendungen Schutzbereiche variabler und genauer festgelegt und mehr und genauere Klassen von erlaubten Objektbewegungen unterschieden werden. Beispielsweise ist es möglich, Bewegungen des Roboters selbst oder Vorbeibewegungen eines Körperteils an der gefährlichen Maschine in einer unterschiedlichen Tiefenebene als ungefährlich zu erkennen. Das wäre mit einem zweidimensionalen System von einem unzulässigen Eingriff nicht unterscheidbar.

Um diese Vorteile einer flexibleren Schutzfelddefinition nutzen zu können, sind handhabbare Konfiguratoren erforderlich, um die dreidimensionalen Schutzfeldgrenzen auf einfache Weise festzulegen. Bekannt ist beispielsweise, die Schutzfelder in einer Art einfachem CAD-Programm zu definieren. Das erfordert aber viel Fachwissen und Erfahrung im Umgang mit dreidimensionalen Bilddaten und dem Konfigurationsprogramm. Die DE 10 2005 063 217 A1 offenbart ein solches Verfahren, das den zusätzlichen Nachteil hat, dass Setupmarken benötigt werden, die vor der Konfiguration in dem Sichtbereich der Kamera platziert werden müssen.

In der EP 2 023 160 B1 wird ein visuelles Merkmal eingesetzt, mit dessen Hilfe die Bewegungen der abzusichernden Gefahrenquelle eingelernt und daraus die Schutzfelder abgeleitet werden. Dazu muss eine verhältnismäßig komplexe Software eingesetzt werden, damit die Schutzfeldgrenzen sicherheitstechnischen Maßstäben genügen, und die Eingriffsmöglichkeiten für einen qualifizierten Fachmann sind verringert. Die EP 2 048 557 verwendet ein mobiles Handgerät, mit dem der Einrichter direkt in der Szenerie die gewünschten Schutzfeldgrenzen bezeichnet, während die 3D-Kamera ihn beobachtet und die Position des Handgeräts erfasst. Das ist zwar sehr komfortabel, erfordert aber das Handgerät als zusätzliche Hardware.

Die relativ komplizierte Eingabe von dreidimensionalen Schutzfeldern bei herkömmlichen 3D-Kamerasystemen lässt sich durch modernde CAD-Programme benutzerfreundlich gestalten, so dass die Bedienung nach kürzester Zeit auch ohne tiefgehende Vorkenntnisse erlernt werden kann. Allerdings ist dazu erforderlich, dass der Anwender sich gut visuell in der Szenerie orientieren kann, wie sie ihm von dem 3D-Kamerasystem präsentiert wird. Das gilt im Übrigen nicht nur während der Konfiguration von Schutzfeldern, sondern auch im eigentlichen Betrieb, wo der Anwender eine Anzeige des 3D-Kamerasystems zu Prüf- und Wartungszwecken nutzen möchte.

Auf einem einfachen Bildschirm lassen sich aber die dreidimensionalen Bilddaten nicht ohne Weiteres darstellen. Dreidimensionale Darstellungen, also beispielsweise ein autostereoskopischer Bildschirm, eine Shutterbrille, eine Rot/Grün-Brille oder gar eine Datenbrille oder dergleichen, sind für den Zweck zu aufwändig. Stattdessen wird üblicherweise die Entfernung in den einzelnen Bildpunkten beispielsweise über eine Falschfarbe oder eine Graustufe codiert. Derartige Bilder wiederum werden vom Anwender als zumindest ungewohnt empfunden und stehen damit einer intuitiven Bedienung im Weg. Das vermindert insgesamt die Akzeptanz von 3D-Kamerasystemen gerade im Bereich der Sicherheitstechnik.

Eine prinzipiell denkbare Alternative wäre, die aufgenommene Szenerie perspektivisch darzustellen und eine freie Auswahl der Perspektive zu erlauben. Dem steht entgegen, dass die 3D-Kamera die Szenerie nur aus einer Perspektive erfasst. Es werden damit keine vollständigen Objektkonturen erfasst, sondern nur diejenigen, die der Kamera zugewandt sind. Wegen dieser unvollständigen Information führt eine freie Auswahl der Perspektive in dem Konfigurator zu Ansichten, die der eigentlichen Szenerie nur sehr bedingt ähneln.

Der Anwender interessiert sich auch unabhängig von der Art und Weise ihrer Präsentation nicht allein für die Abstandswerte der Tiefenkarte. Die Farb- und Helligkeitsinformationen der Szenerie, also das, was auf einem üblichen flachen Kamerabild dargestellt ist, bieten wertvolle Orientierungshilfen. Dazu zählen insbesondere Markierungen, also beispielsweise farbige Grenzmarkierungen oder Abklebungen. Diese enthalten oft besonders sicherheitsrelevante Informationen, etwa gelbe Grenzmarkierungen um eine Maschine, die einen von der Maschine beanspruchten und von Personen nicht zu betretenden Bereich abgrenzen und die sich somit zumindest als Ausgangspunkt für ein Schutzfeld besonders eigenen. Naturgemäß sind solche Grenzmarkierungen in einer Tiefenkarte mangels Abstandsänderung nicht zu sehen.

Aus diesem Grund besteht aus Anwendersicht der Wunsch, dass zusätzlich zu der Tiefenkarte auch ein Hintergrundbild mit diesen Farb- oder Helligkeitsinformationen angezeigt wird. Dazu werden dann beide Bilder nebeneinander dargestellt, oder es wird eine Umschaltung zwischen Tiefenkarte und Hintergrundbild angeboten. In dem Tiefenbild werden die Schutzfelder konfiguriert und das Hintergrundbild als Orientierungshilfe herangezogen. Weil hierbei an sich zusammengehörige Bildinformationen getrennt präsentiert werden, wird die Übersicht beeinträchtigt, und es entsteht eine unnötige Komplexität. Außerdem ist das Umschalten zwischen zwei Ansichten zumindest unintuitiv und lästig, während die gleichzeitige Darstellung zweier Bilder nebeneinander auf kleineren Monitoren unter der geringen Auflösung leidet. Das gilt besonders für Notebooks, die wegen ihrer Mobilität für die Konfiguration häufig eingesetzt werden, und erst recht für Maschinendisplays.

Ein weiteres Problem stellt sich noch bei der Gewinnung des Hintergrundbildes, wenn eine aktive, strukturierte Beleuchtung eingesetzt wird. Dann sind nämlich die natürlichen Objektstrukturen derart von der Beleuchtung überlagert, dass sie für das Auge kaum noch erkennbar sind. Um dies zu lösen, kann einerseits ein zusätzlicher Bildsensor in einem anderen Spektrum eingesetzt werden. Alternativ wird in einer Art Zeitmultiplexing jeweils ein Frame zwischengeschaltet, in dem die Beleuchtung inaktiv ist. Schließlich sind verschiedene Möglichkeiten denkbar, das Beleuchtungsmuster schnell gegenüber der Belichtungszeit zu verändern, so dass es für die Aufnahme effektiv zu einer homogenen Beleuchtung wird. Ansätze zur einfachen Gewinnung eines Hintergrundbildes bei strukturierter Ausleuchtung sind in der nachveröffentlichten DE 10 2010 036 852 offenbart.

Aus der medizinischen Bildverarbeitung sind Verfahren bekannt, die Bilder aus unterschiedlichen Bildquellen, wie CT, MRT oder PET, in eine Darstellung fusionieren, um eine Isolation von Krankheitsherden und daraus eine detaillierte Operationsplanung zu ermöglichen. So können beispielsweise Skelettstrukturen in Grauwerten und Zelldichten von markierten Krebszellen in einer Farbdarstellung codiert werden. Dabei können unterschiedliche Schnitte in einem Voxelraum dargestellt werden. Hierbei werden aber gleichartige Daten fusioniert, nämlich dreidimensionale Daten aus verschiedenen Quellen, und nicht zweidimensionale Bilddaten mit dreidimensionalen Tiefenwerten. Zudem erfasst keines der beteiligten Verfahren optische Eigenschaften wie natürliche Farben, sondern dem Auge nicht zugängliche Eigenschaften wie Kontrastmitteldichten oder Wasseranteile.

Aus der DE 31 06 100 A1 ist eine Hinderniswarnvorrichtung für Luft-, Raum- oder Wasserfahrzeuge bekannt. Dabei werden mit Hilfe eines Radargeräts Objektentfernungen und Objektgeschwindigkeiten gemessen, und zugleich wird mit einer Kamera ein elektronisches Bild des gleichen Raumwinkelbereichs aufgezeichnet. Auf einem Farbmonitor werden dann alle Bildpunkte, deren zugehörige Objekte unterhalb einer bestimmten Entfernung liegen, entsprechend ihrer Entfernung verschiedenfarbig codiert, während alle Bildpunkte mit einer größeren Entfernung einfarbig dargestellt werden und das Bild der Kamera liefern.

Die DE 10 2007 003 712 A1 befasst sich mit einer Bilderkennung beim Entstapeln von Masseln, d.h. in einer durch Gießen in einer entsprechenden Form hergestellter Metallbarren. Von dem Stapel wird beispielsweise mit einer Kamera ein Grauwertbild und mit einer Stereokamera ein Abstandsbild aufgenommen, und beide Bilder werden in einem Bildauswertesystem zum Erkennen der Lage der Masseln kombiniert.

In der US 2011/0157159 A1 werden dreidimensionale stereoskopische Bilder aus einem 2D-Bild und einer Entfernungskarte zusammengesetzt.

Die DE 10 2009 004 898 A1 beschreibt ein Verfahren zur Darstellung zweier unterschiedlicher Bilder eines Fusionsbildes. Dabei wird beispielsweise ein Magnetresonanzbild mit einer Positronemissionstomographie überlagert dargestellt, und durch Wischgesten kann zwischen Darstellungen gewechselt werden, bei dem nur das eine Bild, nur das andere Bild oder beide Bilder gezeigt werden.

Die Arbeit von Maria C. Garcia-Alegre, David Martin, D. Miguel Guinea and Domingo Guinea (2011), "Real-Time Fusion of Visual Images and Laser Data Images for Safe Navigation in Outdoor Environments", Sensor Fusion - Foundation and Applications, Ciza Thomas (Ed.), ISBN: 978-953-307-446-7, InTech, befasst sich mit der Fusionierung von 2D-Laserscannerdaten und Kamerabildern.

Es ist daher Aufgabe der Erfindung, ein 3D-Kamerasystem mit einer verbesserten Visualisierung der erfassten Szenerie anzugeben.

Diese Aufgabe wird durch ein 3D-Kamerasystem und durch ein Verfahren zum Einrichten oder Überprüfen eines 3D-Kamerasystems gemäß Anspruch 1 beziehungsweise 11 gelöst. Dabei geht die Erfindung von dem Grundgedanken aus, sowohl eine dreidimensionale Tiefenkarte als auch ein zweidimensionales Hintergrundbild aufzunehmen und Informationen aus beiden Quellen darzustellen. Damit dies in einem einzigen Bild möglich ist, werden Tiefenkarte und Hintergrundbild in einem Fusionsbild überlagert, wobei in einem ersten Teilbereich Informationen der Tiefenkarte und in einem zweiten Teilbereich Informationen des Hintergrundbildes dargestellt werden. Die ersten und zweiten Teilbereiche für sich müssen dabei nicht zusammenhängend sein oder anders ausgedrückt, können jeweils beliebig viele Teilbereiche für die Darstellung von Informationen der Tiefenkarte und des Hintergrundbildes vorgesehen sein. Die ersten und zweiten Teilbereiche sind vorzugsweise überlappungsfrei in dem Sinne, dass jedes Pixels eindeutig entweder auf Informationen der Tiefenkarte oder des Hintergrundbildes beruht. Allerdings können die ersten und zweiten Teilbereiche auch engmaschig ineinander verzahnt sein, beispielsweise als alternierendes Muster aus Pixeln des ersten und des zweiten Teilbereichs.

Die Erfindung hat den Vorteil, dass für den Anwender, beispielsweise den Einrichter oder das Servicepersonal, eine einfache konventionelle Orientierung in dem Fusionsbild aufgrund der Informationen des Hintergrundbildes, zugleich aber auch eine eindeutige Darstellung der Tiefeninformationen der Szenerie möglich ist. Dabei sind weder weitere Hilfsmittel, wie Spezialbrillen oder teure Spezialanzeigen, noch das Einbringen von künstlichen Objekten oder Setupmarken in die Szenerie zur Orientierung erforderlich. Die Konfiguration von dreidimensionalen Feldern wird so erheblich vereinfacht und bleibt nicht mehr nur dem Spezialisten vorbehalten. Es ergibt sich eine konsistente Darstellung unterschiedlicher Informationen in einer Konfigurations- und Testansicht.

Die Bildfusionierungseinrichtung ist dafür ausgebildet, den ersten Teilbereich und den zweiten Teilbereich anhand mindestens einer Tiefenschwelle festzulegen. Somit werden Bildpunkte des Fusionsbildes, deren zugehöriger Ort im Raumbereich in einer Entfernung oberhalb der Tiefenschwelle liegt, dem ersten Teilbereich zugeordnet und die übrigen Bildpunkte dem zweiten Teilbereich oder umgekehrt. Die Tiefenschwelle ist damit ein Auswahlkriterium, in welchem Abstand Objekte als Tiefenkarte dargestellt werden sollen und in welchem Abstand als Hintergrundbild. Dadurch wird eine selektive Darstellung ausgewählter Informationen in einem Bild ermöglicht. Anstelle einer einzigen Tiefenschwelle sind auch mehrere Tiefenschwellen denkbar, die dann jeweils Entfernungsbereiche festlegen, die dem ersten Teilbereich oder dem zweiten Teilbereich zuzuordnen sind. Eine besonders bevorzugte Ausführungsform verwendet zwei Tiefenschwellen, die somit ein Abstandsfenster festlegen, innerhalb dessen die Tiefenkarte in das Hintergrundbild oder umgekehrt das Hintergrundbild in die Tiefenkarte eingeblendet werden soll.

Vorzugsweise ist eine Tiefenschwellenkonfigurationseinrichtung vorgesehen, um die mindestens eine Tiefenschwelle zu setzen oder zu verändern. Der Anwender wählt somit selbst aus, welche Abstandsebenen als Abtrennung zwischen der Darstellung von Tiefenkarte und Hintergrundbild dienen sollen. Diese Auswahl erfolgt beispielsweise durch in Software implementierte oder physische Schiebeschalter, mit denen die Höhenlage der Tiefenschwelle verändert wird. Durch extreme Wahl der Tiefenschwellen kann exklusiv nur die Tiefenkarte oder das Hintergrundbild dargestellt werden.

Die Bildfusionierungseinrichtung ist bevorzugt dafür ausgebildet ist, in dem ersten Teilbereich Entfernungswerte der Tiefenkarte durch eine Farbcodierung und/oder eine Helligkeitscodierung darzustellen und in dem zweiten Teilbereich die Farbbilddaten und/oder die Helligkeitsbilddaten des Hintergrundbildes darzustellen. Somit werden Informationen der Tiefenkarte in Falschfarben oder eine Grauwertcodierung übersetzt, während das Hintergrundbild, ganz wie ein übliches Foto oder ein Bild einer Filmaufnahme, als die aufgenommene Farb- oder Helligkeitsinformation dargestellt wird.

Die Bildfusionierungseinrichtung ist bevorzugt dafür ausgebildet, in dem ersten Teilbereich andere Farben und Grautöne zu verwenden als in dem zweiten Teilbereich. Tiefenkarte und Hintergrundbild weichen einander somit im Farbraum aus, damit der Anwender sofort erkennt, welche Bereiche einen echten Bildausschnitt des Hintergrundbildes und welche Bereiche eine farbwertcodierte Entfernung der Tiefenkarte anzeigen. Dazu können die Tiefenkarte in Grautönen und das Hintergrundbild farbig dargestellt werden und umgekehrt. Der Farbraum kann aber auch anders aufgespalten werden, beispielsweise Gelb-Rot gegen Blau-Grün, Pastelltöne gegen starke Farbtöne oder allgemein unterschiedliche Farbsättigung sowie helle gegen dunkle oder warme gegen kalte Farben. Diese Farbraumaufteilung kann auch vom Anwender konfigurierbar oder auswählbar sein.

Erfindungsgemäß ist eine Feldkonfigurationseinrichtung vorgesehen, um Feldgrenzen von Schutzfeldern, Warnfeldern und/oder Automatisierungsfeldern festzulegen oder anzupassen. Schutzfelder werden auf unzulässige Objekteingriffe überwacht, und im Falle eines solchen Eingriffs erfolgt eine sicherheitsgerichtete Abschaltung. Warnfelder werden ebenfalls auf unzulässige Objekteingriffe überwacht, lösen aber lediglich einen Alarm aus. Sie sind häufig den Schutzfeldern vorgelagert, damit die Person, die den Eingriff verursacht, womöglich noch rechtzeitig von einem Schutzfeldeingriff abgehalten wird. Unter einem Automatisierungsfeld wird ein Feld verstanden, das nicht direkt sicherheitsrelevant ist, sondern eine zusätzliche Funktionalität bietet. Diese kann darin bestehen, dass ein Eingriff wie die Betätigung eines Schalters gewertet wird. Automatisierungsfelder sind dann virtuelle Schalter, insbesondere Zweihandschaltungen. Ein weiteres Beispiel für ein Automatisierungsfeld ist ein solches, in dem der Füllgrad bestimmt wird, also der Volumenanteil, der von einem Objekt besetzt ist. Das dient zum Beispiel als einfache Messung für den Füllgrad einer Kiste, einen Füllstand oder einen Lagerbestand in einem bestimmten Bereich. Automatisierungsfelder können weiterhin dazu dienen, Objekte zu vermessen oder deren Position und Orientierung zu bestimmen, beispielsweise um einen automatischen Arbeitsschritt einer Maschine oder eines Roboters vorzubereiten, oder zur Qualitätssicherung.

Da das 3D-Kamerasystem auch Tiefenwerte auflöst, werden Felder in drei Dimensionen konfiguriert, sind also eigentlich Raumbereiche oder Volumina. Die Konfiguration erfolgt in einem CAD-ähnlichen Werkzeug oder mit einem der sonstigen einleitend genannten Verfahren. Feldgrenzen können als Datensätze importiert beziehungsweise ab Werk festgelegt und zur Auswahl angeboten werden. Denkbar ist weiter, Feldgrenzen aus der Szenerie zu extrahieren, beispielsweise indem vorhandene Grenzmarkierungen übernommen werden.

Die Bildfusionierungseinrichtung ist bevorzugt dafür ausgebildet, dem Fusionsbild eine Darstellung von Feldern zu überlagern. Damit entsteht letztlich eine dreifache Fusion aus den Szenerieinformationen Tiefenkarte und Hintergrundbild sowie den virtuellen Informationen der Felder. Die Felder und ihre Darstellung sind dabei nicht an die ersten oder zweiten Teilbereiche gebunden.

Die Bildfusionierungseinrichtung ist dafür ausgebildet, dem Fusionsbild während des Festlegens oder Anpassens von Feldgrenzen ein Muster, welches die Funktion des Feldes und den Entfernungswert entweder einer Grundfläche oder einer Deckfläche des Feldes codiert, oder ein Muster zu überlagern, welches die Funktion des Feldes und die Entfernungswerte sowohl von Grundfläche als auch Deckfläche des Feldes codiert. Dies setzt die Annahme voraus, dass Felder trotz der prinzipiell freien dreidimensionalen Feldgrenzen in der Praxis nach oben und unten durch eine Fläche abgeschlossen werden, meist sogar verallgemeinerte Zylinder mit beliebiger Form von Grund- und Deckfläche sind. Die Darstellung der Abschlussflächen erfolgt durch ein Muster, welches sowohl die Funktion des Feldes als auch die Höhenlage codiert. Beispielsweise besteht dieses Muster aus gelben Anteilen, um es als Schutzfeld zu kennzeichnen, und einem der Höhenlage entsprechenden Grauwert. Da sich bei einem Zylinder Grundfläche und Deckfläche überlagern, wird entweder selektiv nur die gerade vom Anwender aktivierte Grundfläche oder Deckfläche derart darstellt, oder das Muster enthält einen dritten Musteranteil, welcher die Höhenlage der zweiten Abschlussfläche codiert.

Die Bildfusionierungseinrichtung ist dafür ausgebildet, dem Fusionsbild einen Status eines Feldes zu überlagern, insbesondere für die Status Feld aktiv, Objekteingriff in Feld, Häufigkeit von Objekteingriffen in Feld und Füllgrad eines Feldes. Damit entsteht zusätzlich zu der Ebene der Feldfunktion eine weitere Informationsebene, um Feldstatus beispielsweise im Systemtest zu visualisieren. Die genannten Status sind Beispiele von besonders relevanten und häufig benötigten Informationen für Warnfelder, Schutzfelder und Automatisierungsfelder.

Die Bildfusionierungseinrichtung ist dafür ausgebildet, dem Fusionsbild Felder und/oder Status durch Wahl oder Veränderung einer der folgenden Eigenschaften oder einer Kombination der Eigenschaften zu überlagern: Linienart, Transparenz, Farbsättigung, Farbe, Muster. Dies sind verschiedene Möglichkeiten, zusätzliche Informationen in dasselbe Fusionsbild zu codieren. Die Linienart bezeichnet die Möglichkeit, eine Grenzlinie oder eine Schraffur mit unterschiedlichem Stil darzustellen, wie durchgezogen, gestrichelt oder gepunktet. Muster bieten eine große Freiheit, besonders wenn Lücken in das Muster integriert sind, in denen eine tiefere Ebene durchscheint oder zusätzliche Codierungen untergebracht werden. So kann beispielsweise eine Schraffur zwischen den Einzelstrichen die Tiefenkarte oder das Hintergrundbild durchscheinen lassen.

Der 3D-Bildsensor weist bevorzugt als stereoskopischer Bildsensor zwei einzelne Bildsensoren in einem Basisabstand zueinander sowie eine Stereoskopieeinheit zur Erzeugung der dreidimensionalen Bilddaten aus von den beiden Bildsensoren aus unterschiedlicher Perspektive aufgenommenen Bildern auf. Damit können dicht besetzte Tiefenkarten mit hoher Auflösung erfasst werden. Alternativ weist der 3D-Bildsensor als Lichtlaufzeitsensor eine Pixelmatrix zur Bestimmung von Lichtlaufzeiten in ihren einzelnen Pixeln auf. Hierbei ist nur ein Bildsensor erforderlich. Allerdings sind solche TOF-Bildsensoren nur in geringer Bildauflösung verfügbar.

Vorteilhafterweise ist eine Beleuchtungseinheit vorgesehen, um den Raumbereich mit einem strukturierten Beleuchtungsmuster auszuleuchten, wobei insbesondere der 3D-Bildsensor die dreidimensionalen Bilddaten aus entfernungsabhängigen Eigenschaften des Beleuchtungsmusters erzeugt. Solche strukturierten Beleuchtungsmuster sorgen auch in einer Szenerie mit wenig natürlicher Struktur für eine zuverlässige Entfernungsbestimmung bei hoher Bildauflösung.

Der 3D-Bildsensor dient bevorzugt zugleich in Doppelfunktion als 2D-Bildsensor. Damit werden die Hardwareanforderungen verringert, und das 3D-Kamerasystem wird weniger aufwändig. Bei einer Stereokamera lässt sich dies realisieren, indem zumindest einer der beiden Bildsensoren als 2D-Bildsensor fungiert.

Das 3D-Kamerasystem ist bevorzugt als Sicherheitskamerasystem ausgebildet, wobei eine Schutzfeldüberwachungseinrichtung unzulässige Eingriffe in Schutzfelder innerhalb des Raumbereichs erkennen und daraufhin ein Abschaltsignal erzeugen kann, und wobei ein Sicherheitsausgang vorgesehen ist, um darüber ein Abschaltsignal an eine überwachte Maschine auszugeben. Die Darstellung des Fusionsbildes erleichtert die Einrichtung und Überprüfung eines solchen Sicherheitssystems.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische räumliche Gesamtdarstellung einer Stereokamera als Beispiel einer 3D-Kamera;
- Fig. 2: eine Blockdarstellung einer Ausführungsform eines 3D-Kamerasystems mit Erzeugung und Darstellung eines Fusionsbildes;
- Fig. 3: ein beispielhaftes, von einem 3D-Kamerasystem erzeugtes Fusionsbild;
- Fig. 4a: eine schematische Darstellung eines Musters, in dem zwei unterschiedliche Informationen codiert sind; und
- Fig. 4b: eine schematische Darstellung eines Musters, in dem drei unterschiedliche Informationen codiert sind.

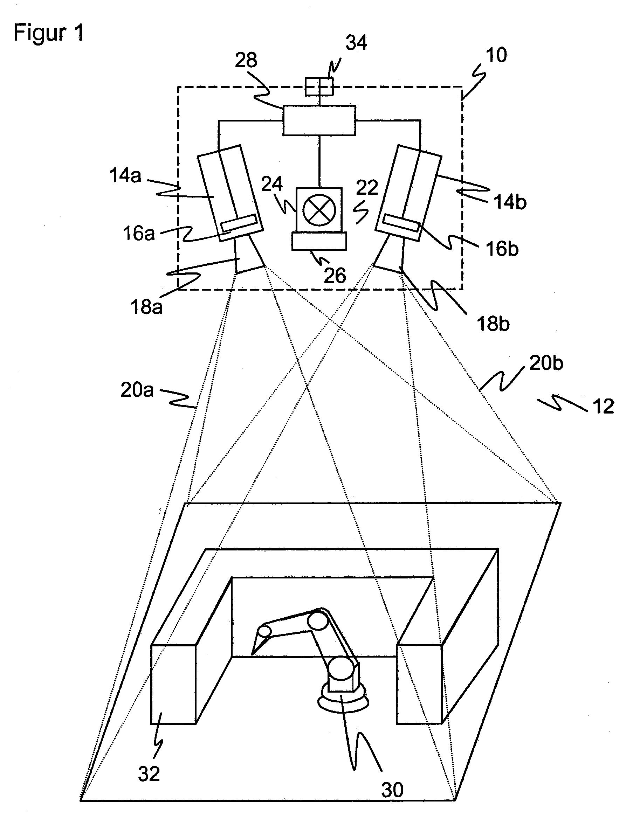

Figur 1 zeigt in einer schematischen dreidimensionalen Darstellung den Aufbau einer 3D-Kamera 10, die zur sicherheitstechnischen Überwachung eines Raumbereichs 12 eingesetzt ist. Die 3D-Kamera 10 ist in der dargestellten Ausführungsform als aktive Stereokamera ausgebildet. Die Erfindung umfasst aber auch andere Arten von 3D-Kameras, insbesondere passive Stereokameras ohne eigene Beleuchtung oder die einleitend genannten Lichtlaufzeitkameras sowie Kameras, die zur Entfernungsbestimmung Musterstrukturen auswerten.

In der 3D-Kamera 10 sind zwei Kameramodule 14a, 14b in einem bekannten festen Abstand zueinander montiert und nehmen jeweils Bilder des Raumbereichs 12 auf. In jeder Kamera ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 16a, 16b ist jeweils ein Objektiv 18a, 18b zugeordnet, welches als jedes bekannte Abbildungsobjektiv realisiert sein kann. Die Sichtpyramiden 20a, 20b der Kameramodule 14a, 14b sind in Figur 1 durch gestrichelte Linien dargestellt.

In der Mitte zwischen den beiden Bildsensoren 16a, 16b ist eine Beleuchtungseinheit 22 dargestellt, wobei diese räumliche Anordnung nur als Beispiel zu verstehen ist. Die Beleuchtungseinheit 22 umfasst eine Lichtquelle 24, etwa als LED oder Laserlichtquelle ausgebildet, und ein Mustererzeugungselement 26. Damit wird in den Raumbereich 12 ein strukturiertes Beleuchtungsmuster projiziert.

Eine Steuerungs- und Auswertungseinheit 28 ist mit den beiden Bildsensoren 16a, 16b verbunden und empfängt so Bilddaten des Raumbereichs 12 in Form von jeweils zwei Rohbildern. Daraus berechnet die Auswertungseinheit 28 mit Hilfe einer stereoskopischen Disparitätsschätzung eine Tiefenkarte beziehungsweise ein Entfernungsbild mit dreidimensionalen Bilddaten des Raumbereichs 12. Das strukturierte Beleuchtungsmuster sorgt dabei für einen guten Kontrast und eine eindeutig zuordenbare Struktur jedes Bildelements in dem beleuchteten Raumbereich 12.

In dem von der 3D-Kamera 10 überwachten Raumbereich 12 befindet sich ein Roboterarm 30 als Beispiel einer zu überwachenden Gefahrenquelle. Um diese Gefahrenquelle abzusichern, ist ein virtuelles dreidimensionales Schutzfeld 32 vorgesehen. Die Auswertungseinheit 28 überwacht das Schutzfeld 32 auf unzulässige Objekteingriffe, also jegliche Eingriffe, die nicht ausnahmsweise als erlaubt erkannt oder eingelernt wurden. Wird ein unzulässiger Objekteingriff erkannt, so wird über einen sicheren Ausgang 34 (OSSD, Output Signal Switching Device) die Gefahrenquelle abgesichert, beispielsweise ein Roboterarm oder eine sonstige Maschine gestoppt beziehungsweise in eine ungefährliche Parkposition verbracht. Der sichere Ausgang 34 kann auch virtuell über ein sicheres Netzwerk realisiert werden.

Um für sicherheitstechnische Anwendungen geeignet zu sein, ist die 3D-Kamera 10 fehlersicher ausgelegt. Dies bedeutet unter anderem, dass die 3D-Kamera 10 sich selber in Zyklen unterhalb der geforderten Ansprechzeit testen kann, insbesondere auch Defekte der Beleuchtungseinheit 22 erkennt und somit sicherstellt, dass das Beleuchtungsmuster in einer erwarteten Mindestintensität verfügbar ist, und dass der Sicherheitsausgang 34 sicher, beispielsweise zweikanalig ausgelegt ist. Ebenso ist auch die Auswertungseinheit 28 selbstsicher, wertet also zweikanalig aus oder verwendet Algorithmen, die sich selbst prüfen können. Derartige Vorschriften sind für allgemeine berührungslos wirkende Schutzeinrichtungen in der EN 61496-1 bzw. der IEC 61496 und der IEC 61508 normiert. Eine entsprechende Norm für Sicherheitskameras befindet sich in der Vorbereitung.

Zusätzlich zu der dreidimensionalen Tiefenkarte wird von zumindest einem der Bildsensoren 16a, 16b ein gewöhnliches, auf den erfassten Farb- beziehungsweise Helligkeitseigenschaften basierendes zweidimensionales Hintergrundbild gewonnen, in dem die natürlichen Objektkonturen der Szenerie in dem Raumbereich 12 zu Prüf- oder Konfigurationszwecken für das menschliche Auge in gewohnter Weise erkennbar sind.

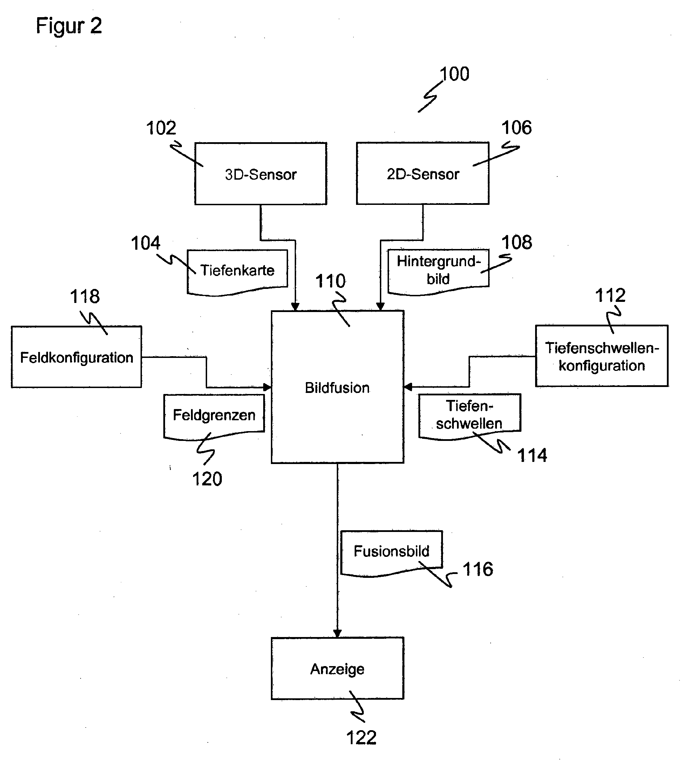

Figur 2 zeigt eine schematische Blockdarstellung eines 3D-Kamerasystems 100, mit dem eine Fusion des Hintergrundbildes und der Tiefenkarte ermöglicht wird. Dabei sind absichtlich andere Bezugszeichen verwendet als in Figur 1, weil die Funktionsblöcke der Figur 2 in unterschiedlicher Weise auf Elemente der in Figur 1 dargestellten 3D-Kamera 10 oder auch auf externe Elemente des Kamerasystems 10 verteilt werden können.

Ein 3D-Sensor 102 liefert eine Tiefenkarte 104 und ein 2D-Sensor 106 ein Hintergrundbild 108 an eine Bildfusionseinrichtung 110. Der 3D-Sensor 102 umfasst beispielsweise die beiden Kameramodule 14a, 14b zur Erzeugung einer Tiefenkarte 104 aus zwei Rohbildern. Der 2D-Sensor 106 kann ein separater Bildsensor sein, oder einer der vorhandenen Bildsensoren 16a, 16b wird in Doppelfunktion für die Erzeugung des Hintergrundbildes 108 eingesetzt.

Mit Hilfe einer Tiefenschwellenkonfiguration 112 werden eine oder mehrere Tiefenschwellen 114 gesetzt und der Bildfusionseinrichtung 110 zur Verfügung gestellt. Die Tiefenschwellenkonfiguration 112 erlaubt vorzugsweise die interaktive Einstellung und Veränderung der Tiefenschwellen 114. Über die Tiefenschwellen 114 wird in der Bildfusionseinrichtung 110 festgelegt, in welchen Tiefenbereichen eine farb- oder helligkeitscodierte Darstellung der Abstandswerte der Tiefenkarte erfolgen soll. Beispielsweise legen jeweils zwei Tiefenschwellen 114 einen oder mehrere Tiefenfensterbereiche fest. Für andere Tiefenbereiche soll statt Abstandswerten der Farb- oder Helligkeitswert des Hintergrundbildes 108 dargestellt werden.

Die Bildfusionseinrichtung 110 kann somit anhand des Abstandswerts aus der Tiefenkarte 104 und der Tiefenschwellen 114 für jeden Bildpunkt eines zu erzeugenden Fusionsbildes 116 festlegen, ob dort der codierte Abstandswert der Tiefenkarte 104 oder der echte Farb- beziehungsweise Grauwert des Hintergrundbildes 108 darzustellen ist.

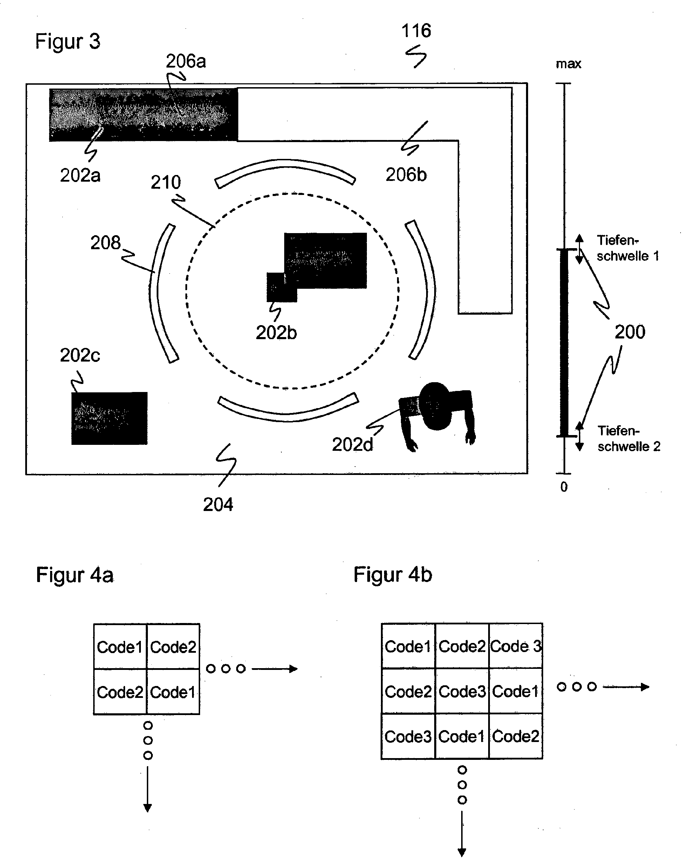

Figur 3 zeigt ein Beispiel eines solchen Fusionsbildes 116. Anhand der Tiefenschwellen 114, die über Schieberegler 200 eingestellt werden, ist das Fusionsbild 116 in einen ersten Teilbereich 202a-d mit codierten Abstandswerten der Tiefenkarte 104 und einen zweiten Teilbereich 204 mit Bilddaten des Hintergrundbildes 108 aufgeteilt. Dabei müssen die Teilbereiche 202, 204 nicht in sich zusammenhängen, sondern die Aufteilung der Teilbereiche ergibt sich aufgrund der Tiefenschwellen 114 und der tatsächlichen Objekthöhen in der Szenerie. Entsprechend der Wahl der Tiefenschwellen 114 entstehen in dem dargestellten Fusionsbild 116 vier getrennte Teilbereiche 202a-d, die auf der Tiefenkarte 104 basieren, während das übrige Fusionsbild 116 von dem zusammenhängenden Teilbereich 204 gebildet wird. Dabei liegt ein Abschnitt 206a einer Werkbank innerhalb des von den Tiefenschwellen 114 definierten Bereichs und ein Abschnitt 206b wegen einer unterschiedlichen Höhe der Werkbank nicht. Dementsprechend wird für den Abschnitt 206a die Tiefenkarte 104 dargestellt und für den Abschnitt 206b das Hintergrundbild 108.

Die Schwarz-Weiß-Zeichnung der Figur 3 lässt kaum Freiheitsgrade, um die Möglichkeiten der unterschiedlichen Farbbereiche darzustellen. Der erste Teilbereich 202a-d ist deshalb in Figur 3 im Gegensatz zu einer realen Darstellung visuell durch eine Grauwertcodierung kaum von dem ebenfalls schwarz-weißen zweiten Teilbereich 204 zu unterscheiden. Im Übrigen wird darauf hingewiesen, dass die Grauwertcodierung der Tiefenwerte rein beispielhaft ist und von tatsächlichen dreidimensionalen Geometrien abweicht.

Ohne die Restriktionen dieser Darstellung können auf einer Farbanzeige beispielsweise farbcodierte Tiefendaten über ein beispielsweise grauwertiges Hintergrundbild gelegt werden. Ausgewählte Maschinenstrukturen sowie Markierungen 208 auf dem Boden bleiben dann bei geeigneter Wahl der Tiefenschwellen 114 erkennbar, während Objekte in dem ausgewählten Tiefenbereich in ihrer Tiefenstruktur abgebildet werden.

Soll das Hintergrundbild 108 selbst farbig sein, so muss die Farbcodierung der beiden zu fusionierenden Bilder 104, 108 zueinander eingeschränkt werden. Ein Ausweichen im Farbraum ist beispielsweise über die Farbsättigung oder den jeweiligen Farbbereich möglich. Alternativ erfolgt bei farbigem Hintergrundbild 108 die Tiefencodierung mit Grauwerten.

Eine zusätzliche Funktion wird durch eine Feldkonfigurationseinrichtung 118 erreicht, mit der dreidimensionale Feldgrenzen 120 festgelegt werden. Die Konfiguration erfolgt beispielsweise wie einleitend erläutert über ein intuitiv zu bedienendes CAD-ähnliches Programm. Dabei ist die Orientierung auf dem Fusionsbild 116 deutlich erleichtert.

Die Bildfusionseinrichtung 108 ist in der Lage, solche Feldgrenzen zusätzlich dem Fusionsbild 116 zu überlagern. Beispielhaft ist in Figur 3 ein Schutzfeld 210 gezeigt, das sich an den vorhandenen Markierungen 208 orientiert und den tiefencodiert gezeigten Roboterarm 30 umgibt. Felder können wie in dem Beispiel der Figur 3 durch Grenzlinien oder als Lückenmuster beziehungsweise semitransparent eingeblendet werden, damit sie die Bildinformationen der Szenerie nicht überdecken.

Solche Feldgrenzen 210 können außer der geometrischen Form der Felder auch deren Funktion oder Status darstellen. Beispielsweise werden unterschiedliche Darstellungen für Schutzfelder, Warnfelder, Automatisierungsfelder und Schaltfelder eingeblendet. Zusätzlich kann auch noch ein Status eincodiert werden.

Beispielsweise wird die Funktion farbcodiert, etwa indem Schutzfelder rot, Warnfelder gelb und Automatisierungs- oder Schaltfelder blau dargestellt werden. Andere Farben oder Farbkombinationen können für die unterschiedlichen Funktionen der konfigurierten Felder angewandt werden. Wie schon die Farbcodierung der Tiefenkarte 104 und das Hintergrundbild 108 bei der Bildfusion einander im Farbraum ausweichen können, besteht diese Möglichkeit weiter, wenn eine zusätzliche Farbcodierung für die Funktion von Feldern benötigt wird, indem der Farbraum weiter unterteilt wird. Man kann etwa das Hintergrundbild in Grauwerten darstellen, die Tiefenwerte in unterschiedlichen Grüntönen codieren und die Funktion der Felder wie im obigen Beispiel belassen. Alternativ sind auch Überschneidungen im Farbraum denkbar, denn die Felder werden anhand ihrer meist regelmäßigen, zusammenhängenden Form und damit in der Regel nicht allein aufgrund der Farbe identifiziert.

Für eine Statusanzeige der Felder können ebenfalls Farbcodierungen, alternativ aber auch Linienarten oder Muster gewählt werden. Einige nützliche Status werden im Folgenden beispielhaft genannt. Der Aktivitätstatus zeigt an, ob ein Feld in der konkreten Anwendung aktiv oder inaktiv ist, angezeigt mit semitransparenten Flächen, die bei aktiven Feldern von durchgezogenen und bei inaktiven Feldern von gestrichelten Linien begrenzt sind. Die Objektanwesenheit stellt das Feld mit einer blassen Farbe beziehungsweise hohen Transparenz dar, wenn kein Objekt in dem Feld detektiert wurde, und mit einer kräftigen Farbe beziehungsweise geringen Transparenz bei detektierter Anwesenheit eines Objekts in dem Feld. Der Füllgrad zeigt in einem speziellen Automatisierungsfeld durch eine Skala von sehr blassen Farben bis zu kräftiger Sättigung an, welcher Volumenanteil von Objekten besetzt ist.

Sämtliche hier beispielhaft genannten Codierungen für Funktion und Status können auch anders aufgeteilt und vermischt werden. Für Tests aktiver Felder, beispielsweise ob das Feld ein Objekt detektiert hat oder nicht, kann eine Änderung der Farbe oder Farbsättigung verwendet werden. Ein Status kann statt durch festgelegte Muster, Transparenz oder Farbe auch durch einen Wechsel angezeigt werden. Beispielsweise wechseln Schutzfelder je nach Anwesenheit oder Abwesenheit von Objekten zwischen rot und grün und Warnfelder zwischen gelb und orange.

Das derart erzeugte Fusionsbild 116 wird dem Anwender auf einer Anzeige 122 dargestellt. Diese Anzeige kann Teil der 3D-Kamera 10 sein, etwa außen an deren Gehäuse, aber auch extern beispielsweise auf einem eigenen Monitor oder einem angeschlossenen Notebook, welches die Bilddaten des Fusionsbildes 116 empfängt. Überhaupt kann die Funktionalität des 3D-Kamerasystems, also insbesondere die stereoskopische Auswertung, die Bildfusion 110, die Tiefenschwellenkonfiguration 112, die Feldkonfiguration 118 und die Anzeige 122, in vielfältiger Weise auf die eigentliche 3D-Kamera 10 mit ihrer eigenen Auswertungseinheit 28 und externe Einheiten, beispielsweise ein angeschlossenes Notebook, verteilt werden.

Die Bildfusionseinrichtung 110 muss, wenn zusätzlich zu Informationen der Tiefenkarte 104 und des Hintergrundbildes 108 auch Feldgrenzen 120 sowie Funktion und Status des zugehörigen Feldes darzustellen sind, häufig überlappende Informationen in demselben Bildbereich darstellen. Dies lässt sich durch alternierende Muster lösen, von denen Beispiele für zwei überlappende Informationen in Figur 4a und für drei überlappende Informationen in Figur 4b gezeigt sind. Der Bereich wird dabei in Kacheln, Streifen oder beliebige andere Teilbereiche unterteilt und diesen Kacheln alternierend eine in Figur 4 als Code1, Code2 und Code3 bezeichnete Information zugewiesen.

Dies sei noch näher an einem Beispiel der Konfiguration eines Feldes erläutert. Trotz der im Grunde beliebigen Freiheit bei der Wahl dreidimensionaler Feldgrenzen basieren Felder in der Praxis regelmäßig auf einer gemeinsamen Grundfläche, die in Tiefenrichtung extrudiert ist, sind also erweiterte Zylinder. Bei der Konfiguration eines solchen Feldes in der gewünschten Höhenlage und Ausdehnung werden die Grund- und Deckflächen als Kachel- oder Streifenmuster aus Funktionsfarbe, beispielsweise gelb für Schutzfeld, und einem codierenden Tiefenwert für die Höhenlage dargestellt. Es gibt dabei zwei Möglichkeiten, um die Überlagerung von Grund- und Deckfläche aufzulösen. Entweder wird selektiv nur die gerade für die Konfiguration ausgewählte Fläche, also die Grund- oder die Deckfläche, gemäß Figur 4a mit einem Tiefenwert als Code1 und der Funktionsfarbe als Code2 bemustert. Alternativ erfolgt die Bemusterung gemäß 4b sowohl Grund- als auch Deckfläche mit Code1 für die Funktionsfarbe, Code2 für die Höhenlage der Grundfläche und Code3 für die Höhenlage der Deckfläche.

Während des Runtime-Betriebsmodus' können erkannte Objekte mit dem codierten Tiefenwert in das Hintergrundbild 108 fusioniert angezeigt und zusätzlich mit einem Funktionsfenster umrahmt werden, welches ein für den Ort des Objekts aktives Warnoder Schutzfeld darstellt. Damit erhält der Maschinenbediener einen Hinweis auf die Ursachen einer Warnmeldung oder eines Maschinenstopps und kann diese Ursache in kurzer Zeit beseitigen oder eine Nachkonfiguration der Felder veranlassen. Dies ist ein Beispiel für die nützliche Verwendung des Fusionsbildes 116 auch nach Abschluss der Konfiguration.

## Patentansprüche

1. 3D-Kamerasystem (100) zur Überwachung eines Raumbereichs (12), welches einen 3D-Bildsensor (10, 102) zur Erzeugung einer Tiefenkarte (104) mit entfernungsaufgelösten dreidimensionalen Bilddaten des Raumbereichs (12), einen 2D-Bildsensor (16a, 16b) zur Erzeugung eines Hintergrundbildes (108) mit zweidimensionalen Farbbilddaten oder Helligkeitsbilddaten des Raumbereichs (12), eine Anzeigeeinrichtung (122) zur Darstellung von Bilddaten sowie eine Bildfusionierungseinrichtung (110) aufweist, die dafür ausgebildet ist, ein gemeinsames Fusionsbild (116) des Raumbereichs (12) aus einer Tiefenkarte (104) und einem Hintergrundbild (108) zu erzeugen, wobei das Fusionsbild (116) in mindestens einem ersten Teilbereich (202) visuell codierte Entfernungswerte der Tiefenkarte (104) und in mindestens einem zweiten Teilbereich (204), der von dem ersten Teilbereich (202) verschieden ist, die Farbbilddaten und/oder die Helligkeitsdaten des Hintergrundbildes (108) darstellt, wobei der erste Teilbereich (202) und der zweite Teilbereich (204) anhand mindestens einer Tiefenschwelle (114) festgelegt sind und wobei die Bildfusionierungseinrichtung (110) mit der Anzeigeeinrichtung (122) verbunden ist, um das Fusionsbild (116) zu übergeben und anzuzeigen
**dadurch gekennzeichnet,**
**dass** eine Feldkonfigurationseinrichtung (118) vorgesehen ist, um in drei Dimensionen Feldgrenzen (120) von Schutzfeldern (32, 210), Warnfeldern und/oder Automatisierungsfeldern festzulegen oder anzupassen und dass die Bildfusionseinrichtung (110) dafür ausgebildet ist, dem Fusionsbild (116) während des Festlegens oder Anpassens von Feldgrenzen (120) ein Muster zu überlagern, welches die Funktion des Feldes (210) und den Entfernungswert einer Grundfläche und/oder einer Deckfläche des Feldes codiert, und dass die Bildfusionseinrichtung (110) ferner dafür ausgebildet ist, dem Fusionsbild eine Darstellung von Feldern und einen Status eines Feldes (210) durch Wahl oder Veränderung einer der folgenden Eigenschaften oder einer Kombination der folgenden Eigenschaften zu überlagern: Linienart, Transparenz, Farbsättigung, Farbe, Muster.

2. 3D-Kamerasystem (100) nach Anspruch 1,
wobei die Bildfusionierungseinrichtung (110) dafür ausgebildet ist, den ersten Teilbereich (202) und den zweiten Teilbereich (204) anhand zweier Tiefenschwellen (114) festzulegen.

3. 3D-Kamerasystem (100) nach Anspruch 2,
wobei eine Tiefenschwellenkonfigurationseinrichtung (112, 200) vorgesehen ist, um die mindestens eine Tiefenschwelle (114) zu setzen oder zu verändern.

4. 3D-Kamerasystem (100) nach einem der vorhergehenden Ansprüche,
wobei die Bildfusionierungseinrichtung (110) dafür ausgebildet ist, in dem ersten Teilbereich (202) Entfernungswerte der Tiefenkarte (104) durch eine Farbcodierung und/oder eine Helligkeitscodierung darzustellen.

5. 3D-Kamerasystem (100) nach Anspruch 4,
wobei die Bildfusionierungseinrichtung (110) dafür ausgebildet ist, in dem ersten Teilbereich (202) andere Farben und Grautöne zu verwenden als in dem zweiten Teilbereich (204).

6. 3D-Kamerasystem (100) nach einem der vorhergehenden Ansprüche,
wobei die Bildfusionierungseinrichtung (110) dafür ausgebildet ist, dem Fusionsbild (116) einen der Status Feld aktiv, Objekteingriff in Feld, Häufigkeit von Objekteingriffen in Feld und Füllgrad eines Feldes zu überlagern.

7. 3D-Kamerasystem (100) nach einem der vorhergehenden Ansprüche,
wobei der 3D-Bildsensor (10, 102) als stereoskopischer Bildsensor zwei einzelne Bildsensoren (16a, 16b) in einem Basisabstand zueinander sowie eine Stereoskopieeinheit (28) zur Erzeugung der dreidimensionalen Bilddaten aus von den beiden Bildsensoren (16a, 16b) aus unterschiedlicher Perspektive aufgenommenen Bildern aufweist, oder wobei der 3D-Bildsensor als Lichtlaufzeitsensor eine Pixelmatrix zur Bestimmung von Lichtlaufzeiten in ihren einzelnen Pixeln aufweist.

8. 3D-Kamerasystem (100) nach einem der vorhergehenden Ansprüche,
wobei eine Beleuchtungseinheit (22) vorgesehen ist, um den Raumbereich (12) mit einem strukturierten Beleuchtungsmuster auszuleuchten, und wobei insbesondere der 3D-Bildsensor (10, 102) die dreidimensionalen Bilddaten aus entfernungsabhängigen Eigenschaften des Beleuchtungsmusters erzeugt.

9. 3D-Kamerasystem (100) nach einem der vorhergehenden Ansprüche, wobei der 3D-Bildsensor (10, 102) zugleich in Doppelfunktion als 2D-Bildsensor (16a, 16b, 106) dient, insbesondere indem einer der beiden Bildsensoren (16a, 16b) eines stereoskopischen Bildsensors (10, 102) als 2D-Bildsensor (106) fungiert.

10. 3D-Kamerasystem (100) nach einem der vorhergehenden Ansprüche,
das als Sicherheitskamerasystem ausgebildet ist, wobei eine Schutzfeldüberwachungseinrichtung (28) unzulässige Eingriffe in Schutzfelder (32, 210) innerhalb des Raumbereichs (12) erkennen und daraufhin ein Abschaltsignal erzeugen kann, und wobei ein Sicherheitsausgang (34) vorgesehen ist, um darüber ein Abschaltsignal an eine überwachte Maschine (30) auszugeben.

11. Verfahren zum Einrichten oder Überprüfen eines 3D-Kamerasystems (100), bei dem eine Tiefenkarte (104) mit entfernungsaufgelösten dreidimensionalen Bilddaten des Raumbereichs (12) und ein Hintergrundbild (108) mit zweidimensionalen Farbbilddaten oder Helligkeitsbilddaten des Raumbereichs (12) erzeugt wird und die Tiefenkarte (104) und das Hintergrundbild (108) angezeigt werden, wobei ein Fusionsbild (116) des Raumbereichs (12) aus der Tiefenkarte (104) und dem Hintergrundbild (108) angezeigt wird, wobei das Fusionsbild (116) in mindestens einem ersten Teilbereich (202) visuell codierte Entfernungswerte der Tiefenkarte (104) und in mindestens einem zweiten Teilbereich (204), der von dem ersten Teilbereich (202) verschieden ist, die Farbbilddaten und/oder die Helligkeitsdaten des Hintergrundbildes (108) darstellt, wobei der erste Teilbereich (202) und der zweite Teilbereich (204) anhand mindestens einer Tiefenschwelle (114) festgelegt sind,
**dadurch gekennzeichnet,**
**dass** in drei Dimensionen Feldgrenzen (120) von Schutzfeldern (32, 210), Warnfeldern und/oder Automatisierungsfeldern festgelegt oder angepasst werden und dem Fusionsbild (116) während des Festlegens oder Anpassens von Feldgrenzen (120) ein Muster überlagert wird, welches die Funktion des Feldes (210) und den Entfernungswert einer Grundfläche und/oder einer Deckfläche des Feldes codiert, und dass dem Fusionsbild eine Darstellung von Feldern und ein Status eines Feldes (210) durch Wahl oder Veränderung einer der folgenden Eigenschaften oder einer Kombination der folgenden Eigenschaften überlagert wird: Linienart, Transparenz, Farbsättigung, Farbe, Muster.

## Claims

1. A 3D camera system (100) for monitoring a spatial region (12), comprising a 3D image sensor (10, 102) for the generation of a depth map (104) with distance resolved three dimensional image data of the spatial region (12); a 2D image sensor (16a, 16b) for the generation of a background image (108) with two dimensional colour image data or brightness image data of the spatial region (12), a display unit (122) for the presentation of image data; and further comprising an image merging unit (110) which is adapted to generate a common merged image (116) of the spatial region (12) from a depth map (104) and a background image (108), wherein the merged image (116) represents visually coded distance values of the depth map (104) in at least one first part region (202) and the colour image data and/or the brightness data of the background image (108) in at least one second part region (204) which is different from the first part region (202), wherein the first part region (202) and the second part region (204) are determined by means of at least one depth threshold value (114) and wherein the image merging unit (110) is connected to the display unit (122) in order to forward and to display the merged image (116),
**characterized in that**
a field configuration unit (118) is provided in order to determine or to match field boundaries (120) of protective fields (32, 210), warning fields and/or automation fields in three dimensions; and **in that** the image merging unit (110) is adapted to superimpose a pattern on the merged image (116) during the determination of or the matching of field boundaries (120), the pattern coding the function of the field (210) and the distance value of a base surface and/or of a cover surface of the field; and **in that** the image merging unit (110) is further adapted to superimpose a representation of fields and a status of a field (210) on the merged image by means of a selection of or a change of one of the following properties or a combination of one of the following properties; line type, transparency, colour saturation, colour, pattern.

2. A 3D camera system (100) in accordance with claim 1,
wherein the image merging unit (110) is adapted to determine the first part region (202) and the second part region (204) by means of two depth threshold values (114).

3. A 3D camera system (100) in accordance with claim 2,
wherein a depth threshold value configuration unit (112, 200) is provided in order to set or to change the at least one depth threshold value (114).

4. A 3D camera system (100) in accordance with any one of the preceding claims,
wherein the image merging unit (110) is adapted to represent distance values of the depth map (104) in the first part region (202) by a colour coding and/or a brightness coding.

5. A 3D camera system (100) in accordance with claim 4,
wherein the image merging unit (110) is adapted to use different colours and grey scales in the first part region than in the second part region (204).

6. A 3D camera system (100) in accordance with any one of the preceding claims,
wherein the image merging unit (110) is adapted to superimpose on the merged image (116) one of a status field active, an object intrusion in field, a frequency of object intrusions into the field and a filling level of a field.

7. A 3D camera system (100) in accordance with any one of the preceding claims,
wherein the 3D image sensor (10, 102) has two individual image sensors (16a, 16b) separated at a base spacing with respect to one another as a stereoscopic image sensor, and further comprising a stereoscopic unit (28) for the generation of the three dimensional image data from images taken from different perspectives by the two image sensors (16a, 16b), or wherein the 3D image sensor has a pixel matrix for the determination of times of flight of light in its individual pixels as a light propagation sensor.

8. A 3D camera system (100) in accordance with any one of the preceding claims,
wherein an illumination unit (22) is provided in order to illuminate the spatial region (12) with a structured illumination pattern and wherein in particular the 3D image sensor (10, 102) generates the three dimensional image data from distance dependent properties of the illumination pattern.

9. A 3D camera system (100) in accordance with any one of the preceding claims,
wherein the 3D image sensor (10, 102) simultaneously serves as a 2D image sensor (16a, 16b, 106) in a dual function, in particular in that one of the two image sensors (16a, 16b) of a stereoscopic image sensor (10, 102) functions as a 2D image sensor (106).

10. A 3D camera system (100) in accordance with any one of the preceding claims,
which is adapted as a safety camera system, wherein a protective field monitoring unit (28) recognizes unallowed intrusions in protective fields (32, 210) within the spatial region (12) and thereupon can generate a switch-off signal and wherein a safety output (34) is provided in order to output a switch-off signal to a monitored machine (30) through the safety output.

11. A method of installing or checking a 3D camera system (100), in which a depth map (104) is generated with distance resolved three dimensional image data of the spatial region (12) and a background image (108) is generated with two dimensional colour image data or brightness image data of the spatial region (12) and the depth map (104) and the background image (108) are displayed; wherein a merged image (116) of the spatial region (12) from the depth map (104) and from the background image (108) are displayed, wherein the merged image (116) represents visually coded distance values of the depth map (104) in at least one first part region (202) and represents the colour image data and/or the brightness data in at least one second part region (204) which is different from the first part region (202), wherein the first part region (202) and the second part region (204) are determined by means of at least one depth threshold value (114),
**characterized in that**
field boundaries (120) of protective fields (32, 210), warning fields and/or automation fields are determined or matched in three dimensions and a pattern is superimposed on the merged image (116) during the determination or matching of field boundaries (120), the pattern coding the function of the field (210) and the distance value of a base surface and/or of a cover surface of the field; and **in that** a representation of fields and a status of a field (210) are superimposed on the merged image by means of a selection of or a change of one of the following properties or a combination of one of the following properties; line type, transparency, colour saturation, colour, pattern.

## Revendications

1. Système à caméra 3D (100) pour la surveillance d'une zone d'espace (12), qui comprend un capteur d'image 3D (10, 102) pour générer une carte de profondeur (104) avec des données image tridimensionnelles avec résolution en distance de la zone d'espace (12), un capteur d'image 2D (16a, 16b) pour générer une image d'arrière-plan (108) avec des données image en couleurs bidimensionnelles ou des données image en luminosité bidimensionnelles de la zone de l'espace (12), un système d'affichage (122) pour la représentation de données image ainsi qu'un système de fusionnement d'images (110) qui est réalisé pour générer une image de fusion commune de la zone d'espace (12) à partir d'une carte de profondeur (104) et d'une image d'arrière-plan (108), dans lequel l'image de fusion (116) représente dans au moins une première zone partielle (202) des valeurs d'éloignement avec codage visuel de la carte de profondeur (104) et représente dans au moins une seconde zone partielle (204), qui est différente de la première zone partielle (202), les données image en couleurs et/ou les données image en luminosité de l'image d'arrière-plan (108), dans lequel la première zone partielle (202) et la seconde zone partielle (204) sont fixées à l'aide d'au moins un seuil de profondeur (114) et dans lequel le système de fusionnement d'images (110) est relié au système d'affichage (122) pour transmettre et afficher l'image de fusion (116),
**caractérisé en ce que**
il est prévu un système de configuration de champ (118) afin de fixer ou d'adapter dans trois dimensions des limites de champ (120) de champs de protection (32, 210), de champs d'avertissement et/ou de champs d'automatisation, et **en ce que** le système de fusionnement d'images (110) est réalisé pour superposer à l'image de fusion (116), pendant la fixation ou l'adaptation des limites de champ (120), un motif qui code la fonction du champ (210) et la valeur d'éloignement d'une surface de base et/ou d'une surface de plafonnement du champ, et **en ce que** le système de fusionnement d'images (110) est en outre réalisé pour superposer à l'image de fusion une représentation de champ et un état d'un champ (210) par sélection ou modification de l'une des propriétés suivantes ou d'une combinaison des propriétés suivantes : type de ligne, transparence, saturation chromatique, couleur, motif.

2. Système à caméra 3D (100) selon la revendication 1,
dans lequel le système de fusionnement d'images (110) est réalisé pour fixer la première zone partielle (202) et la seconde zone partielle (204) au moyen de deux seuils de profondeur (114).

3. Système à caméra 3D (100) selon la revendication 2,
dans lequel il est prévu un système de configuration de seuil de profondeur (112, 200) afin de définir ou de modifier ledit au moins un seuil de profondeur (114).

4. Système à caméra 3D (100) selon l'une des revendications précédentes,
dans lequel le système de fusionnement d'images (110) est réalisé pour représenter dans la première zone partielle (202) des valeurs d'éloignement de la carte de profondeur (104) par un codage chromatique et/ou par un codage de luminosité.

5. Système à caméra 3D (100) selon la revendication 4,
dans lequel le système de fusionnement d'images (110) est réalisé pour utiliser dans la première zone partielle (202) des couleurs et des tons de gris autres que dans la seconde zone partielle (204).

6. Système à caméra 3D (100) selon l'une des revendications précédentes,
dans lequel le système de fusionnement d'images (110) est réalisé pour superposer à l'image de fusion (116) l'un des états suivants : champ actif, intervention d'un objet dans le champ, fréquence d'intervention d'objets dans le champ, et degré de remplissage d'un champ.

7. Système à caméra 3D (100) selon l'une des revendications précédentes,
dans lequel le capteur d'image 3D (10, 102) comprend à titre de capteur d'image stéréoscopique deux capteurs d'image individuels (16a, 16b) à une distance de base l'un de l'autre, ainsi qu'une unité stéréoscopique (28) pour générer les données image tridimensionnelles à partir d'images prises par les deux capteurs d'images (16a, 16b) depuis des perspectives différentes, ou dans lequel le capteur d'image 3D comprend à titre de capteur à temps de propagation de la lumière une matrice de pixels pour déterminer les temps de propagation de la lumière dans ses pixels individuels.

8. Système à caméra 3D (100) selon l'une des revendications précédentes,
dans lequel il est prévu une unité d'éclairage (22) afin d'éclairer la zone d'espace (12) avec un motif d'éclairage structuré, et dans lequel le capteur d'image 3D génère en particulier les données image tridimensionnelles à partir de propriétés dépendant de l'éloignement dans le motif d'éclairage.

9. Système à caméra 3D (100) selon l'une des revendications précédentes,
dans lequel le capteur d'image 3D (10, 102) sert simultanément, en double fonction, de capteur d'image 2D (16a, 16b, 106), en particulier en ce que l'un des deux capteurs d'image (16a, 16b) d'un capteur d'image stéréoscopique (10, 102) fait office de capteur d'image 2D (106).

10. Système à caméra 3D (100) selon l'une des revendications précédentes,
qui est réalisé sous forme de système à caméra de sécurité, dans lequel un système de surveillance de champ de protection (28) peut reconnaître des interventions inadmissibles dans des champs de protection (32, 210) à l'intérieur de la zone d'espace (12) et peut générer ensuite un signal de coupure, et dans lequel il est prévu une sortie de sécurité (34) afin de délivrer via celle-ci un signal de coupure à une machine surveillée (30).

11. Procédé pour organiser ou contrôler un système à caméra 3D (100), dans lequel on génère une carte de profondeur (104) avec des données image tridimensionnelles avec résolution en éloignement de la zone d'espace (12), et une image d'arrière-plan (108) avec des données image en couleurs bidimensionnelles ou des données image en luminosité bidimensionnelles de la zone d'espace (12), et la carte de profondeur (104) et l'image d'arrière-plan (108) sont affichées, dans lequel une image de fusion (116) de la zone d'espace (12) formée à partir de la carte de profondeur (104) et de l'image d'arrière-plan (108) est affichée, dans lequel l'image de fusion (116) représente dans au moins une première zone partielle (202) des valeurs d'éloignement avec codage visuel de la carte de profondeur (104) et représente dans au moins une seconde zone partielle (204), qui est différente de la première zone partielle (202), les données image en couleurs ou les données image en luminosité de l'image d'arrière-plan (108), et dans lequel la première zone partielle (202) et la seconde zone partielle (204) sont fixées à l'aide d'au moins un seuil de profondeur (114), **caractérisé en ce que**
on fixe ou on adapte dans trois dimensions des limites de champ (120) de champs de protection (32, 210), de champs d'avertissement et/ou de champs d'automatisation, et l'on superpose à l'image de fusion (116), pendant la fixation ou l'adaptation de limites de champ (120), un motif qui code la fonction du champ (210) et la valeur d'éloignement d'une surface de base et/ou d'une surface de plafonnement du champ, et **en ce que** l'on superpose au champ de fusion une représentation de champ et un état d'un champ (210) par sélection ou modification de l'une des propriétés suivantes ou d'une combinaison des propriétés suivantes : type de ligne, transparence, saturation chromatique, couleur, motif.
